# EUROPEAN PATENT APPLICATION

(11) **EP 1 992 600 A1**
(43) Date of publication of application: **19.11.2008**
(21) Application number: 08002931.7
(22) Date of filing: 18.02.2008
(51) Int. Cl.: C04B 35/565, C04B 38/00

(54) **Method for manufacturing material for silicon carbide fired body and method for manufacturing honeycomb structured body**

(30) Priority: 09.05.2007 WO PCT/JP2007/059616
(71) Applicant: IBIDEN CO., LTD., Ogaki-shi Gifu 503-8604 (JP)
(72) Inventor: Naruse, Kazuya, 45320 Courtenay (FR); Tajima, Kosei, Ibigawacho, Ibi-gun, Gifu 501-0695 (JP)
(74) Representative: HOFFMANN EITLE

(57) **Abstract**

An obj ect of the present invention is to provide a method for manufacturing a material for a silicon carbide fired body suitably used for manufacturing a porous silicon carbide sintered body, the material containing iron compound powders uniformly distributed therein, the method comprising a process of wet mixing, or wet-pulverizing and wet-mixing at least a silicon carbide powder and an iron compound powder.

## Description

### TECHNICAL FIELD

The present invention relates to a method for manufacturing a material for a silicon carbide fired body, and a method for manufacturing a honeycomb structured body.

### BACKGROUND ART

There has recently been a problem that particulates such as soot contained in exhaust gases discharged from internal combustion engines of vehicles such as buses and trucks, and construction machines and the like cause harm to the environment and the human body.
For this reason, there have been proposed various kinds of honeycomb filters using a honeycomb structured body comprising porous ceramics as a filter for capturing particulates contained in exhaust gasses and purifying the exhaust gases.
As a honeycomb structured body of this kind, there has been proposed a honeycomb structured body comprising silicon carbide, due to the excellent high-temperature resistance.

There has been known a method, for example, disclosed in Patent Document 1, as a method for manufacturing a honeycomb fired body comprising silicon carbide as described above.
Specifically, there is disclosed a method for carrying out a first process of manufacturing a honeycomb molded body by carrying out molding by using a silicon carbide powder having a total content of Al, B, and Fe elements of 1% by weight or less and a free carbon content of 5% by weight or less as a starting material, a second process of sealing an end portion of a predetermined through hole of the above-mentioned honeycomb molded body with a predetermined plug material, and a third process of sintering the above-mentioned sealed honeycomb molded body in a non-oxidizing atmosphere.

Patent Document 1: JP-A 1-258715

### DISCLOSURE OF THE INVENTION PROBLEM TO BE SOLVED BY THE INVENTION

As described above, in the method for manufacturing a honeycomb structured body, first, a honeycomb molded body is manufactured by extrusion molding, and then degreasing treatment is carried out on the honeycomb molded body.
In the degreasing treatment, a binder, a dispersant solution and the like are decomposed and removed. However, in the case where the degreasing treatment is allowed to proceed to completion with complete decomposition and removal of organic components in the honeycomb molded body in the degreasing treatment, the degreased honeycomb molded body (honeycomb degreased body) has a reduced strength, resulting in failure to maintain its structure, and pinholes, cracks or the like possibly occur in a honeycomb fired body obtained by carrying out firing treatment on the honeycomb degreased body.
For this reason, the honeycomb degreased body needs to contain a carbon residue derived from the binder and the like.

On the other hand, upon manufacturing a honeycomb fired body by carrying out firing treatment on the honeycomb degreased body, in case of using a honeycomb degreased body containing a carbon residue, presence of the carbon among silicon carbide powders interferes with contact between the silicon carbide powders, resulting in prevention of sintering of the silicon carbide.

### MEANS FOR SOLVING THE PROBLEM

The present inventors have conducted intensive studies to solve the above-mentioned problems and obtained an idea of mixing an iron compound powder into a raw material composition in advance, in order to remove a carbon residue contained in a honeycomb degreased body in firing treatment.
Moreover, the present inventors have conducted further studies and completed the method for manufacturing a material for a silicon carbide fired body with the following findings. That is, only an addition of the iron compound powder alone fails to solve the above-mentioned problems, and high distribution of the iron compound powders in the raw material composition is needed to solve the above-mentioned problems. For this reason, the raw material composition needs to be prepared by wet mixing, or wet-pulverizing and wet-mixing a silicon carbide powder and the iron compound powder.
In addition, the present inventors have completed the method for manufacturing a honeycomb structured body with the finding that use of a material for a silicon carbide fired body of this kind enables suitable manufacturing of a honeycomb fired body including silicon carbide.

The method for manufacturing a material for a silicon carbide fired body described in claim 1 comprises a process of wet mixing, or wet-pulverizing and wet-mixing at least a silicon carbide powder and an iron compound powder.
According to the method for manufacturing a material for a silicon carbide fired body described in claim 1, a material for a silicon carbide fired body containing uniformly distributed iron compound powders can be manufactured, since the manufacturing method comprises a process of wet mixing, or wet-pulverizing and wet-mixing the silicon carbide powder and the iron compound powder.

According to the method for manufacturing a material for a silicon carbide fired body described in claim 2, the iron compound powder comprises at least one kind selected from a group consisting of Fe₂O₃, Fe₃O₄ and FeO, in the above-mentioned method for manufacturing a material for a silicon carbide fired body.
In the method for manufacturing a material for a silicon carbide fired body described in claim 2, upon manufacturing a porous silicon carbide sintered body using the manufactured material for a silicon carbide fired body, sintering is allowed to certainly proceed, since the iron compound powder comprises at least one kind selected from a group consisting of Fe₂O₃, Fe₃O₄, and FeO.
The reason will be described later.

According to the method for manufacturing a material for a silicon carbide fired body described in claim 3, the content of the iron compound powder in the material for a silicon carbide fired body is 0.25 to 2.5% by weight, in the above-mentioned method for manufacturing a material for a silicon carbide fired body.
In the method for manufacturing a material for a silicon carbide fired body described in claim 3, upon manufacturing a porous silicon carbide sintered body using the manufactured material for a silicon carbide fired body, sintering is allowed to certainly proceed, since the content of the above-mentioned iron compound powder is 0.25 to 2.5% by weight.

In the method for manufacturing a material for a silicon carbide fired body described in claim 4, in a mixture obtained by wet mixing, or wet-pulverizing and wet-mixing the silicon carbide powder and the iron compound powder, an average diameter (D50) of the iron compound powder having been wet mixed, or wet-pulverized and wet-mixed (hereinafter, also simply referred to having been mixed) is 0.1 to 1.0 µm, and also equal to or less than an average particle diameter (D50) of the silicon carbide powder having been wet mixed, or wet-pulverized and wet-mixed.
This is because the iron compound powders and the silicon carbide powders tend to be uniformly mixed, by carrying out wet mixing, or wet-pulverizing and wet-mixing to obtain the iron compound powder having been mixed and the silicon carbide powder having been mixed both of which have average particle diameters within the above-mentioned ranges as the method for manufacturing a material for a silicon carbide fired body described in claim 4.

The method for manufacturing a material for a silicon carbide fired body described in claim 5 further comprises a process of adding and mixing a silicon carbide coarse powder having a larger average particle diameter (D50) than that of the silicon carbide powder having been wet mixed, or wet-pulverized and wet-mixed, to the mixture obtained by wet mixing, or wet-pulverizing and wet-mixing the silicon carbide powder and the iron compound powder.
According to the method for manufacturing a material for a silicon carbide fired body described in claim 5, the manufactured material for a silicon carbide fired body contains two kinds of silicon carbide particles each having a different average particle diameter, since the silicon carbide coarse powder having a larger average particle diameter (D50) is additionally added and mixed. Upon manufacturing a porous silicon carbide sintered body, a material for a silicon carbide fired body of this kind allows sintering to proceed certainly and enables a manufactured porous silicon carbide sintered body to have smaller variations in a pore diameter and a porosity.

According to the method for manufacturing a material for a silicon carbide fired body described in claim 6, the silicon carbide powder having been wet mixed, or wet-pulverized and wet-mixed has an average particle diameter (D50) of 0.1 to 1.0 µm, in the method for manufacturing a material for a silicon carbide fired body described in claim 5.
In the method for manufacturing a material for a silicon carbide fired body described in claim 7, in addition to the methods for manufacturing a material for a silicon carbide fired body described in claims 5 and 6, the silicon carbide coarse powder has an average particle diameter (D50) of 0.3 to 50 µm.
The material for a silicon carbide fired body manufactured by the methods for manufacturing a material for a silicon carbide fired body described in claims 6 and 7 is particularly suitably used for manufacturing a porous silicon carbide sintered body having a pore diameter and a porosity which are suitable for use as a honeycomb filter or a catalyst carrier.

According to the method for manufacturing a material for a silicon carbide fired body described in claim 8, the content of the iron compound powder in the mixture obtained by wet mixing, or wet-pulverizing and wet-mixing the silicon carbide powder and the iron compound powder is 1 to 10% by weight, in the methods for manufacturing a material for a silicon carbide fired body described in claims 5 to 7.
In the method for manufacturing a material for a silicon carbide fired body described in claim 8, upon manufacturing a porous silicon carbide sintered body using the manufactured material for a silicon carbide fired body, sintering is allowed to proceed more certainly, since the content of the above-mentioned iron compound is within the above-mentioned range.

According to the method for manufacturing a material for a silicon carbide fired body described in claim 9, a silicon carbide coarse powder is added to and mixed to the mixture obtained by wet mixing, or wet-pulverizing and wet-mixing, after carrying out drying treatment on the mixture, in addition to the methods for manufacturing a material for a silicon carbide fired body described in claims 5 to 8.
In the method for manufacturing a material for a silicon carbide fired body described in claim 9, since drying treatment is once carried out on the mixture obtained by wet mixing, or wet-pulverizing and wet-mixing, the silicon carbide powder and/or the iron compound powder have less tendency to agglomerate, resulting in a less amount of powders having a larger size. Therefore, upon manufacturing a porous silicon carbide sintered body using the manufactured material for a silicon carbide fired body, sintering is allowed to proceed more certainly. In addition, the manufactured porous silicon carbide sintered body shows smaller variations in a pore diameter and a porosity.

According to the method for manufacturing a material for a silicon carbide fired body described in claim 10, a purity of the iron compound powder is more than 80% and equal to or less than 99%, in the above-mentioned method for manufacturing a material for a silicon carbide fired body.
In the method for manufacturing a material for a silicon carbide fired body described in claim 10, upon manufacturing a porous silicon carbide sintered body using the manufactured material for a silicon carbide fired body, sintering is allowed to proceed more certainly, since the purity of iron compound powder is within the above-mentioned range.

The method for manufacturing a honeycomb structured body described in claim 11 comprises a process of: manufacturing a pillar-shaped honeycomb molded body where a large number of cells are disposed in parallel with one another in a longitudinal direction with a cell wall therebetween by molding a raw material composition containing a material for a silicon carbide fired body and an additive; manufacturing a honeycomb degreased body by carrying out degreasing treatment on the honeycomb molded body; and manufacturing a honeycomb structured body including a honeycomb fired body by carrying out firing treatment on said honeycomb degreased body, wherein said material for a silicon carbide fired body is manufactured by a manufacturing method including the process of wet mixing, or wet-pulverizing and wet-mixing at least a silicon carbide powder and an iron compound powder.

According to the method for manufacturing a honeycomb structured body described in claim 11, a honeycomb structured body is manufactured using the material for a silicon carbide fired body manufactured by the predetermined method, that is, a honeycomb structured body is manufactured using the material for a silicon carbide fired body containing iron compound powders uniformly distributed therein. Therefore, sintering of the silicon carbide is allowed to proceed certainly, the manufactured honeycomb structured body shows low pressure loss and smaller variations in a pore diameter and a porosity.
In the present specification, the shape indicated by the word "pillar" refers to any desired shape of a pillar including a round pillar, an oval pillar, a polygonal pillar and the like.

According to the method for manufacturing a honeycomb structured body described in claim 12, the iron compound powder comprises at least one kind selected from a group consisting of Fe₂O₃, Fe₃O₄ and FeO, in the above-mentioned method for manufacturing a honeycomb structured body.
In the method for manufacturing a honeycomb structured body described in claim 12, since the iron compound powder includes at least one kind selected from the group consisting of Fe₂O₃, Fe₃O₄ and FeO, the manufactured honeycomb structured body is formed by a honeycomb fired body having been certainly sintered.

According to the method for manufacturing a honeycomb structured body described in claim 13, the content of the iron compound powder in the material for a silicon carbide fired body is 0.25 to 2. 5% by weight, in the above-mentioned method for manufacturing a honeycomb structured body.
In the method for manufacturing a honeycomb structured body described in claim 13, since the content of the above-mentioned iron compound powder is 0.25 to 2.5% by weight, the manufactured honeycomb structured body is formed by a honeycomb fired body having been certainly sintered.

In the method for manufacturing a honeycomb structured body described in claim 14, in a mixture obtained by wet mixing, or wet-pulverizing and wet-mixing the silicon carbide powder and the iron compound powder, an average diameter (D50) of the iron compound powder having been wet mixed, or wet-pulverized and wet-mixed is 0.1 to 1.0 µm, and also equal to or less than an average particle diameter (D50) of the silicon carbide powder having been wet mixed, or wet-pulverized and wet-mixed.
As described in the method for manufacturing a honeycomb structured body described in claim 14, the iron compound powder and the silicon carbide powder tend to be uniformly mixed, by wet mixing or wet-pulverizing and wet-mixing to obtain the iron compound powder having been mixed and the silicon carbide powder having been mixed both of which have average particle diameters within the above-mentioned ranges. Use of a material for a silicon carbide fired body of this kind enables manufacturing of a honeycomb structured body formed by a honeycomb fired body on which sintering is proceeded more certainly.

In the method for manufacturing a honeycomb structured body described in claim 15, the above-mentioned method for manufacturing a honeycomb structured body further comprises the process of adding and mixing a silicon carbide coarse powder having a larger average particle diameter (D50) than that of the silicon carbide powder having been wet mixed, or wet-pulverized and wet-mixed, to the mixture obtained by wet mixing, or wet-pulverizing and wet-mixing the silicon carbide powder and the iron compound powder.
According to the method for manufacturing a honeycomb structured body described in claim 15, since the silicon carbide coarse powder having a larger average particle diameter (D50) is additionally added and mixed upon manufacturing a material for a silicon carbide fired body, the obtained material for a silicon carbide fired body contains two kinds of silicon carbide particles each having a different average particle diameter. Use of a material for a silicon carbide fired body of this kind allows sintering of the silicon carbide to proceed certainly, and the manufactured honeycomb structured body shows smaller variations in a pore diameter and a porosity.

According to the method for manufacturing a honeycomb structured body described in claim 16, the silicon carbide powder having been wet mixed, or wet-pulverized and wet-mixed has an average particle diameter (D50) of 0.1 to 1.0 µm, in the method for manufacturing a honeycomb structured body according to claim 15.
Moreover, in the method for manufacturing a honeycomb structured body described in claim 17, in addition to the methods for manufacturing a honeycomb structured body described in claims 15 and 16, the silicon carbide coarse powder has an average particle diameter (D50) of 0.3 to 50 µm.
According to the methods for manufacturing a honeycomb structured body described in claim 16 and 17, a honeycomb structured body suitable for use as a honeycomb filter or a catalyst carrier can be suitably manufactured, since a honeycomb structured body is manufactured using the above material for a silicon carbide fired.

According to the method for manufacturing a honeycomb structured body described in claim 18, the content of the iron compound powder in the mixture obtained by wet mixing, or wet-pulverizing and wet-mixing the silicon carbide powder and the iron compound powder is 1 to 10% by weight, in the methods for manufacturing a honeycomb structured body described in claims 15 to 17.
In the method for manufacturing a honeycomb structured body described in claim 18, the manufactured honeycomb structured body is formed by a honeycomb fired body having been certainly sintered, since the content of iron compound powder is within the above-mentioned range.

In the method for manufacturing a honeycomb structured body described in claim 19, the methods for manufacturing a honeycomb structured body described in claims 15 to 18 comprise a process of adding and mixing the silicon carbide coarse powder to the mixture obtained by wet mixing, or wet-pulverizing and wet-mixing, after carrying out drying treatment on the mixture.
According to the method for manufacturing a honeycomb structured body described in claim 19, since drying treatment is once carried out, upon manufacturing a material for a silicon carbide fired body, on the mixture obtained by wet mixing, or wet-pulverizing and wet-mixing, the silicon carbide powder and/or the iron compound powder have less tendency to agglomerate, resulting in a less amount of powders having a larger size. Use of the material for a silicon carbide fired body allows sintering of the silicon carbide to proceed certainly, and the manufactured honeycomb structured body shows smaller variations in a pore diameter and a porosity.

According to the method for manufacturing a honeycomb structured body described in claim 20, a purity of the iron compound powder is more than 80% and equal to or less than 99%, in the above-mentioned method for manufacturing a honeycomb structured body.
In the method for manufacturing a honeycomb structured body described in claim 20, since the purity of iron compound powder is within the above-mentioned range, the manufactured honeycomb structured body is formed by a honeycomb fired body having been certainly sintered.

### BEST MODE FOR CARRYING OUT THE INVENTION

First, the method for manufacturing a material for a silicon carbide fired body of the present invention will be described, and subsequently, the method for manufacturing a honeycomb structured body of the present invention will be described.
The method for manufacturing a material for a silicon carbide fired body of the present invention comprises the process of wet mixing, or wet-pulverizing and wet-mixing at least a silicon carbide powder and an iron compound powder.

In addition, the method for manufacturing a honeycomb structured body of the present invention comprises the process of: manufacturing a pillar-shaped honeycomb molded body where a large number of cells are disposed in parallel with one another in a longitudinal direction with a cell wall therebetween by molding a raw material composition containing a material for a silicon carbide fired body and an additive; manufacturing a honeycomb degreased body by carrying out degreasing treatment on the honeycomb molded body; and manufacturing a honeycomb structured body including a honeycomb fired body by carrying out firing treatment on the honeycomb degreased body, wherein the material for a silicon carbide fired body is manufactured by a manufacturing method including the process of wet mixing, or wet-pulverizing and wet-mixing at least a silicon carbide powder and an iron compound powder.

First of all, in the above-mentioned method for manufacturing a material for a honeycomb fired body, a silicon carbide powder and an iron compound powder to be used as starting materials are prepared.
As the iron compound powder, a powder including an iron oxide such as Fe₂O₃, Fe₃O₄, and FeO is preferably used. This is because these iron oxides are suitably used for manufacturing a porous silicon carbide sintered body by using a manufactured material for a silicon carbide fired body. The detail will be described later.
Each of these may be used alone, or two or more kinds of these may be used in combination.

Next, the silicon carbide powder and the iron compound powder prepared as starting materials are put into a wet-pulverizing and wet-mixing machine or a wet mixing machine, and then wet-pulverized and wet-mixed, or wet mixed.
Here, in case of carrying out wet mixing, starting materials having almost the same particle diameters as those of the silicon carbide powder having been mixed and the iron compound powder having been mixed are used. In case of carrying out wet-pulverizing and wet-mixing, starting materials having larger average particle diameters than those of the silicon carbide powder having been mixed and the iron compound powder having been mixed are used.

In addition, in the mixture (the material for a silicon carbide fired body) obtained by wet mixing, or wet-pulverizing and wet-mixing the silicon carbide powder and the iron compound powder prepared as starting materials, the average particle diameter (D50) of the iron compound powder having been mixed is preferably 0.1 to 1.0 µm, and also less than the average particle diameter (D50) of the silicon carbide powder having been mixed.
This is because the iron compound powder and the silicon carbide powder tend to be uniformly mixed in the resulting mixture, by wet mixing, or wet-pulverizing and wet-mixing to obtain the iron compound powder having been mixed and the silicon carbide powder having been mixed both of which have average particle diameters within the above-mentioned ranges.
On the other hand, preparation of an iron compound powder mixed to have an average particle diameter (D50) of less than 0.1 µm disadvantageously requires a huge amount of time and costs. In the case where the average particle diameter (D50) of the iron compound powder having been mixed is more than 1.0 µm, or larger than the average particle diameter (D50) of the silicon carbide powder having been mixed, uniform dispersion of the iron compound powders in the material for a silicon carbide fired body tends to be difficult.
In the present specification, the average particle diameter (D50) refers to a median diameter based on volume.
Here, a specific measuring method of a particle diameter is briefly described. A particle size (particle diameter) is typically represented as an abundance ratio distribution per particle diameter by integrating the measuring results. This abundance ratio distribution per particle diameter is referred to as a particle size distribution. As a measuring method of the particle size distribution, for example, a laser diffraction scattering method on a principle of a measurement based on a volume, or the like, can be employed. Here, in such a method, the particle size distribution is measured on the assumption that the particles have a spherical shape. Then, the particle size distribution is converted into a cumulative distribution, and therefore the above-mentioned median diameter (the diameter where an amount of particles included in a group having larger particle diameters and an amount of particles included in a group having smaller particle diameters becomes equal when a group of particles is divided into the two groups by a certain particle diameter) is calculated.

In case of using a wet mixing machine, the average diameters of the silicon carbide powder having been mixed and the iron compound powder having been mixed can be adjusted by preliminarily adjusting the average particle diameters of the starting materials based on classification and the like. In case of using a wet-pulverizing and wet-mixing machine, the average diameters of the silicon carbide powder having been mixed or the iron compound powder having been mixed can be adjusted by selecting a suitable processing time.

The wet mixing machine is not particularly limited, and examples thereof include a wet mixing machine such as a tumbler mixer, a jet mixer, a bug mixer, a cone-type mixer, a kneader and a ribbon mixer.
Moreover, the wet-pulverizing and wet-mixing machine is not particularly limited, and examples thereof include a wet-pulverizing and wet-mixing machine such as a colloid mill, a cone mill, a bead mill, a V-type mill, a side mill, a ball mill and an attritor.

In addition, as a solvent to be used upon wet mixing, or wet-pulverizing and wet-mixing, examples thereof include water, alcohol such as methanol and ethanol, propylene glycol, ethylene glycol, benzene, carbon tetrachloride, phenol, acetone, sulfonic acid, oleic acid, butyric acid, naphthenic acid, amyl acetate, a sodium hydroxide solution, a sodium silicate solution, a sodium carbonate solution and the like.

After completion of wet-pulverizing and wet-mixing, or wet mixing, the material for a silicon carbide fired body can be manufactured by carrying out, if necessary, drying treatment on the mixture.
The above-mentioned drying treatment is preferably carried out under a condition in which 100% of the solvent used in the above-mentioned wet mixing, or the wet-pulverizing and wet-mixing can be removed.

The content of the iron compound powder in the material for a silicon carbide fired body is preferably 0.25 to 2.5% by weight. This is because sintering is allowed to proceed excellently upon manufacturing a porous silicon carbide sintered body.
On the contrary, in the case where the content of the iron compound powder is less than 0.25% by weight, sintering of silicon carbide may not sufficiently proceed upon manufacturing a porous silicon carbide sintered body using a manufactured material for a silicon carbide fired body. On the other hand, in the case where the content of the above-mentioned iron compound powder is more than 2.5% by weight, upon manufacturing a porous silicon carbide sintered body using a manufactured material for a silicon carbide fired body, the obtained porous silicon carbide sintered body has an extremely large pore diameter, possibly leading to insufficient strength.

In addition, a purity of the silicon carbide powder in the material for a silicon carbide fired body is preferably 96.0 to 99.5%.
In the case where the purity of the silicon carbide powder having been mixed is within the above-mentioned range, sintering is allowed to proceed excellently upon manufacturing a porous silicon carbide sintered body. A purity thereof of less than 96.0% may allow impurities to inhibit proceeding of sintering of the silicon carbide. A purity thereof of more than 99.5% produces few effects in improvement of proceeding of sintering, in addition, adjustment of the purity of a silicon carbide powder having been mixed within such a high purity requires high costs.

Here, in the present specification, the purity of the silicon carbide powder means an amount of the silicon carbide in terms of proportion to compositions other than the iron compound powder contained in the manufactured material for a silicon carbide fired body.
Ideally the material for a silicon carbide fired body contains only the silicon carbide powder and the iron compound powder. However, in practice, unavoidable impurities are contained.
The unavoidable impurities include impurities contained in a starting material, or impurities mixed upon wet-pulverizing and wet-mixing, or wet mixing, and inclusion thereof is unavoidable.

Moreover, in the method for manufacturing a material for a silicon carbide fired body of the present invention, the silicon carbide coarse powder having a larger average particle diameter (D50) than that of the silicon carbide powder having been mixed is preferably additionally mixed to the mixture obtained by wet mixing, or wet-pulverizing and wet-mixing the silicon carbide powder and the iron compound powder prepared as starting materials.
This is because the material for a silicon carbide fired body containing two kinds of silicon carbide particles each having a different average particle diameter allows sintering to certainly proceed, upon manufacturing a porous silicon carbide sintered body, and enables the manufactured porous silicon carbide sintered body to have smaller variations in a pore diameter and a porosity.

Furthermore, in case of employing a manufacturing method including additional mixing of a silicon carbide coarse powder, a silicon carbide powder having been mixed preferably has an average particle diameter (D50) of 0.1 to 1.0 µm. A preferable lower limit of the average particle diameter (D50) of the silicon carbide coarse powder is 0.3 µm, a preferable upper limit thereof is 50 µm, a more preferable lower limit thereof is 5 µm, and a more preferable upper limit thereof is 20 µm.
This is because a manufactured material for a silicon carbide fired body containing the above-mentioned silicon carbide coarse powder is particularly suitably used for manufacturing a porous silicon carbide sintered body having a pore diameter and a porosity suitable for use as a honeycomb filter or a catalyst carrier.

Moreover, in the method for manufacturing a material for a silicon carbide fired body of the present invention, in case of manufacturing a material for a silicon carbide fired body containing the silicon carbide powder and the silicon carbide coarse powder having a larger average particle diameter than that of the silicon carbide powder, that is, in case of manufacturing a material for a silicon carbide fired body containing mixed silicon carbide powders each having a different average particle diameter (D50), the timing for addition of the silicon carbide coarse powder is not particularly limited. Although two kinds of silicon carbide powders each having a different average particle diameter (the silicon carbide powder prepared as a starting material and the silicon carbide coarse powder having a larger average particle diameter than that of the silicon carbide powder) and the iron compound powder prepared as a starting material may be simultaneously mixed at the start, the silicon carbide coarse powder is preferably additionally added and mixed after mixing the silicon carbide powder and the iron compound powder prepared as starting materials.

Furthermore, in case of addition of the silicon carbide coarse powder after mixing the silicon carbide powder and iron compound powder prepared as starting materials, a material for a silicon carbide fired body is preferably manufactured in the following sequence: wet mixing, or wet-pulverizing and wet-mixing is carried out on the silicon carbide powder and the iron compound powder prepared as starting materials to obtain a mixture thereof; drying treatment is carried out on the mixture; and then the silicon carbide coarse powder is mixed to the mixture by dry mixing.
This is because a material for a silicon carbide fired body manufactured by following the above-mentioned sequence allows sintering to excellently proceed. The reason is considered to be as follows.
That is, carrying out the drying treatment once makes aggregation of the silicon carbide powder and/or the iron compound powder difficult, resulting in a less amount of powders having a larger size and certain proceeding of sintering.
In addition, the above-mentioned drying treatment allows decrease in variations in a pore diameter and a porosity of a manufactured porous silicon carbide sintered body.

As the silicon carbide powder to be used in the method for manufacturing a material for a silicon carbide fired body, although an α-type silicon carbide powder, a β-type silicon carbide powder, or a mixture of the α-type and the β-type silicon carbide powder may be used, the α-type silicon carbide powder is preferably used.
This is because the α-type silicon carbide powder is available at a lower cost and has a superior thermal conductivity, compared with the β-type silicon carbide powder.
In addition, since the α-type silicon carbide powder allows easier control of the pore diameter upon manufacturing a porous silicon carbide sintered body, the α-type silicon carbide powder is suitably used for manufacturing the porous silicon carbide sintered body having a uniform pore diameter.

Next, the method for manufacturing a honeycomb structured body of the present invention will be described.

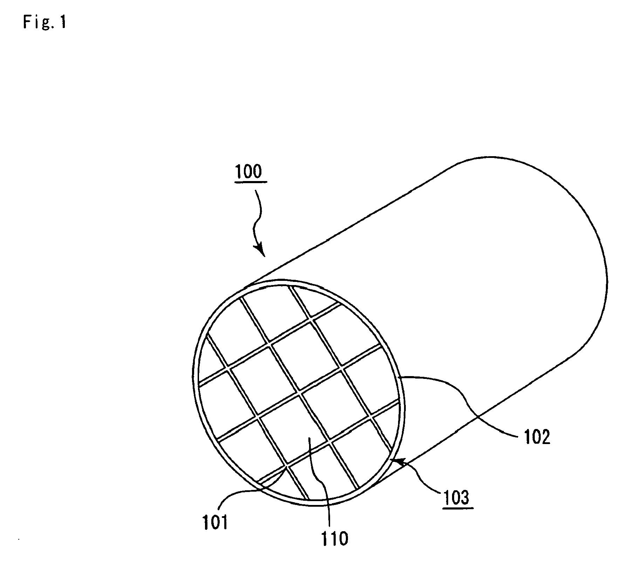

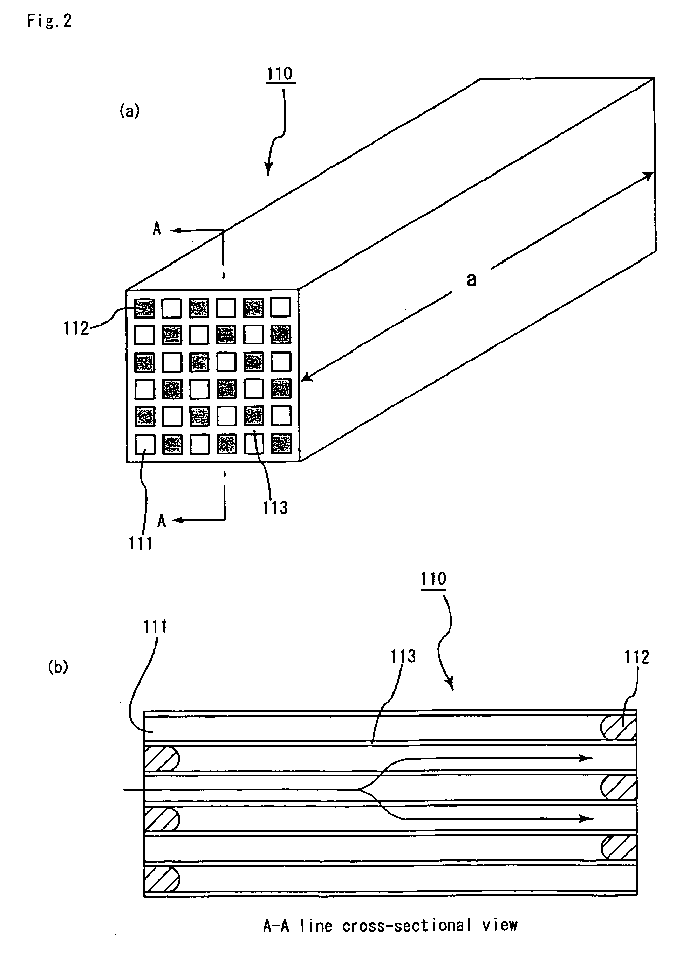

Fig. 1 is a perspective view that schematically shows one example of a honeycomb structured body manufactured by the method for manufacturing a honeycomb structured body of the present invention. Fig. 2(a) is a perspective view that schematically shows a honeycomb fired body that constitutes the above-mentioned honeycomb structured body, and Fig. 2(b) is a cross-sectional view taken along line A-A of Fig. 2(a).

In a honeycomb structured body 100, a plurality of the honeycomb fired bodies 110 shown in Figs. 2(a) and 2(b) are bonded together by interposing a sealing material layer (adhesive layer) 101 to constitute a honeycomb block 103, and a sealing material layer (coat layer) 102 is further formed on the periphery of the honeycomb block 103.
Also, as shown in Fig. 2(a), in the honeycomb fired body 110, a large number of cells 111 are disposed in parallel with one another in a longitudinal direction (the direction shown by an arrow a in Fig. 2(a)), and cell walls 113 individually separating the cells 111 are allowed to function as a filter.

In other words, the end portion of either the exhaust gas-inlet or the exhaust gas-outlet sides of the cell 111 formed in the honeycomb fired body 110 are sealed by a plug 112, as shown in Fig. 2(b), so that exhaust gases flowing into one of the cells 111 must pass through the cell wall 113 separating the cells 111 to flow out through another one of the cells 111, and as the exhaust gases pass through the cell wall 113 particulates are captured by the cell wall 113, thereby purifying the exhaust gases.

Hereinafter, the method for manufacturing a honeycomb structured body of the present invention will be described in the sequential order of the processing.
In the method for manufacturing a honeycomb structured body of the present invention, firstly, a raw material composition comprising a material for a silicon carbide fired body and an additive is prepared.
As the material for a silicon carbide fired body, a material for a silicon carbide fired body manufactured by the method for manufacturing a silicon carbide fired body of the present invention may be used.
As the additive, examples thereof include an organic binder, a plasticizer, a lubricant and the like.

The binder is not particularly limited, and examples thereof include methyl cellulose, carboxymethyl cellulose, hydroxyethyl cellulose, polyethylene glycol and the like.
Generally, the blending amount of the binder is preferably 1 to 10 parts by weight with respect to 100 parts by weight of the material for a silicon carbide fired body.

The plasticizer is not particularly limited, and examples thereof include glycerin and the like.
Also, the lubricant is not particularly limited, and examples thereof include a polyoxyalkylene compound such as polyoxyethylene alkyl ether and polyoxypropylene alkyl ether, and the like.
Specific examples of the lubricant include polyoxyethylene monobutyl ether, polyoxypropylene monobutyl ether and the like.

Furthermore, if necessary, a pore-forming agent such as balloons which are micro hollow spheres comprising oxide-based ceramics, spherical acrylic particles, graphite and the like, may be added to the raw material composition.

As described above, in the method for manufacturing a honeycomb structured body, in case of manufacturing the material for a silicon carbide fired body, the silicon carbide coarse powder having a larger average particle diameter than that of the silicon carbide powder having been mixed is preferably mixed to the mixture obtained by wet mixing, or wet-pulverizing and wet-mixing the silicon carbide powder and the iron compound powder prepared as starting materials. This is because a material for a silicon carbide fired body manufactured by following the above-mentioned sequence allows sintering to excellently proceed.
The reason is considered to be as follows.

The originality of the method for manufacturing a honeycomb structured body of the present invention lies in the iron compound powder mixed in the material for a silicon carbide fired body. Here, the purpose for mixing the iron compound powder is explained by removal of carbon contained in the honeycomb molded body manufactured through the post processes upon firing treatment.
Specifically, for example, in the case where Fe₂O₃ is contained as the iron oxide powder, the reaction of Fe₂O₃ and carbon as shown in the following equation (1) proceeds, resulting in removal of carbon in the honeycomb molded body.

[Formula 1]

Fe₂O₃+C⇄2FeO+CO↑ (1)

Here, in order to positively remove the carbon in a honeycomb molded body (honeycomb degreased body), uniform dispersion of the iron compound powders in the material for a silicon carbide fired body is important.
Non-uniform dispersion of the iron compound powders causes a large amount of carbon remained in the honeycomb molded body without proceeding of a reaction with the iron compound powder, possibly resulting in interruption of sintering of the silicon carbide.

In order to uniformly disperse the iron compound powders in the material for a silicon carbide fired body upon manufacturing the material for a silicon carbide fired body, the silicon carbide coarse powder is additionally added and mixed in the mixture obtained by wet mixing, or wet-pulverizing and wet-mixing the silicon carbide powder and the iron compound powder prepared as starting materials.
In the case where the silicon carbide coarse powder having a larger average particle diameter than that of the silicon carbide powder prepared as a starting material is wet mixed at the same time of mixing of the silicon carbide powder and the iron compound powder prepared as a starting material, or the silicon carbide coarse powder is firstly wet mixed with the iron compound powder, and then the silicon carbide powder having a smaller average particle diameter than that of the silicon carbide coarse powder is added and mixed, the iron compound powder tends to be non-uniformly dispersed, leading to difficulties in uniform dispersion of the iron compound powders in the material for a silicon carbide fired body.

Moreover, the raw material composition containing the material for a silicon carbide fired body prepared as described above preferably has a temperature of 28°C or less. This is because an excessively high temperature thereof may cause gelatinization of a binder.
Moreover, a proportion of organic compounds in the raw material composition is preferably 10% by weight or less, and a content of moisture is preferably 8 to 20% by weight.

Next, the raw material composition is extrusion-molded by an extrusion-molding method and the like. Subsequently, the molded body obtained by extrusion-molding is cut by a cutting machine to manufacture a honeycomb molded body having no sealing and the same shape as the pillar-shaped honeycomb fired body 110 shown in Fig. 2(a).

Next, if necessary, either one end of each cell of the honeycomb molded body is filled with a predetermined amount of a plug material paste, which will serve as the plug, so as to seal the cells.
Specifically, upon manufacturing a honeycomb structured body that functions as a ceramic filter, either end of each cell is sealed.
Here, drying treatment may be carried out, if necessary, before sealing the honeycomb molded body. In this case, the drying treatment is carried out by using a microwave drying apparatus, a hot air drying apparatus, a reduced pressure drying apparatus, a dielectric drying apparatus, a freeze drying apparatus and the like.

Although the above-mentioned plug material paste is not particularly limited, a paste to form, through the post-processes, a plug having a porosity of 30 to 75% is preferably used, and for example, a paste having the same composition as the above-mentioned raw material composition may be used.

Filling with the above-mentioned plug material paste may be carried out, if necessary, and in the case of being filled with the above-mentioned plug material paste, for example, the honeycomb structured body manufactured through the post processes can be suitably used as a ceramic filter, and in the case of not being filled with the above-mentioned plug material paste, for example, the honeycomb structured body manufactured through the post processes can be suitably used as a catalyst supporting carrier.

Next, degreasing treatment is carried out under predetermined conditions (for example, at a temperature of 200 to 500°C for 2 to 4 hours) on the honeycomb molded body with the plug material paste charged therein according to necessity.

Next, by carrying out firing treatment under predetermined conditions (for example, at a temperature of 1400 to 2300°C) on the degreased honeycomb molded body (honeycomb degreased body), a pillar-shaped honeycomb fired body where a plurality of the cells are disposed in parallel with one another in a longitudinal direction with the cell wall therebetween, and either one end of each of the above-mentioned cells is sealed, is manufactured.
Here, as conditions for degreasing or firing the above-mentioned honeycomb molded body, conventional conditions having been used for manufacturing a filter comprising porous ceramics can be used.

In the method for manufacturing a honeycomb structured body of the present invention, as described above, since a powder including iron oxide such as Fe₂O₃, Fe₃O₄ and FeO as the iron compound powder is contained in the material for a silicon carbide fired body, a reaction shown in the above-mentioned reaction formula (1) or a reaction shown in a reaction formula (2) or (3) progresses rightward to remove carbon contained in the honeycomb degreased body.

[Formula 2]

Fe₃O₄+C⇄3FeO+CO↑ (2)

[Formula 3]

FeO+C⇄Fe+CO↑ (3)

As described above, removal of the carbon in the honeycomb degreased body allows easy contact between the silicon carbide powders, resulting in certain proceeding of sintering of the silicon carbide.
The reason why the powder containing iron oxide such as Fe₂O₃, Fe₃O₄, and FeO is preferably used as the above-mentioned iron compound powder is that the above-mentioned iron oxide is a low-price material, and even when the iron oxide is remained in a porous silicon carbide sintered body, the iron oxide will never corrode the silicon carbide sintered body.

Next, a sealing material paste is applied with an even thickness to a side face of the honeycomb fired body to form a sealing material layer (adhesive layer), and by repeating a process for successively laminating another honeycomb fired body on this adhesive paste layer, an aggregated body of honeycomb fired bodies having a predetermined size is manufactured.

Examples of the sealing material paste include a material comprising a combination of an inorganic binder, an organic binder, and inorganic fibers and/or inorganic particles, and the like.
Examples of the inorganic binder include silica sol, alumina sol and the like. These may be used alone, or two or more kinds of these may be used in combination. Out of the above-mentioned inorganic binders, silica sol is preferably used.

Examples of the organic binder include polyvinyl alcohol, methyl cellulose, ethyl cellulose, carboxymethyl cellulose and the like. These may be used alone, or two or more kinds of these may be used in combination. Out of the above-mentioned organic binders, carboxymethyl cellulose is preferably used.

Examples of the inorganic fiber include ceramic fibers made from silica-alumina, mullite, alumina, silica, and the like. These may be used alone, or two or more kinds of these may be used in combination. Out of the above-mentioned inorganic fibers, an alumina fiber is preferably used.

Examples of the inorganic particles include carbide, nitride and the like. Specific examples thereof include an inorganic powder such as silicon carbide, silicon nitride and boron nitride, and the like. These may be used alone, or two or more kinds of these may be used in combination. Out of the above-mentioned inorganic particles, silicon carbide is preferably used, due to the excellent thermal conductivity.

Furthermore, if necessary, a pore-forming agent such as balloons which are micro hollow spheres comprising oxide-based ceramics, spherical acrylic particles, graphite and the like, may be added to the above-mentioned sealing material paste.
The above-mentioned balloons are not particularly limited, and examples thereof include alumina balloons, glass micro balloons, shirasu balloons, fly ash balloons (FA balloons), mullite balloons and the like. Out of these, alumina balloons are preferably used.

Next, the aggregated body of honeycomb fired bodies is heated so that the sealing material paste is dried and solidified to form the sealing material layer (adhesive layer).
Next, by using a diamond cutter and the like, cutting is carried out on the aggregated body of honeycomb fired bodies,
where a plurality of the honeycomb fired bodies are bonded together by interposing the sealing material layer (adhesive layer), thereby manufacturing a round pillar-shaped honeycomb block.

Afterward, the sealing material layer (coat layer) is formed on the periphery of the honeycomb block by using the above-mentioned sealing material paste, thereby manufacturing a honeycomb structured body having the sealing material layer (coat layer) formed on the periphery of the round pillar-shaped honeycomb block where a plurality of the honeycomb fired bodies are bonded together by interposing the sealing material layer (adhesive layer).

Afterward, if necessary, a catalyst is supported on the honeycomb structured body. The catalyst may be supported on the honeycomb fired body before manufacturing the aggregate body.
Upon supporting the catalyst thereon, desirably, an alumina film (layer) having a high specific surface area is formed on the surface of the honeycomb structured body, and a co-catalyst and a catalyst such as platinum are applied to the surface of this alumina film (layer).

Examples of methods for forming the alumina film on the surface of the above-mentioned honeycomb structured body include a method in which the honeycomb structured body is impregnated with a solution of a metal compound containing aluminum such as Al(NO₃)₃ and then heated, a method in which the honeycomb structured body is impregnated with a solution containing an alumina powder and then heated, and the like.
Examples of a method for applying the co-catalyst to the alumina film include a method in which the honeycomb structured body is impregnated with a solution of a metal compound containing a rare-earth element such as Ce (NO₃)₃, and the like and then heated.
Example of a method for applying the catalyst on the alumina film include a method in which the honeycomb structured body is impregnated with a nitric acid solution of dinitro diamine platinum ([Pt(NH₃)₂(NO₂)₂]HNO₃: about 4.53% by weight in platinum concentration) or the like and then heated, and the like.
Moreover, the catalyst may be applied in such a manner that a catalyst is preliminarily applied to alumina particles and the honeycomb structured body is impregnated with a solution containing the alumina powder to which the catalyst has been applied, and then heated.

Also, although the method for manufacturing a honeycomb structured body described hereinabove is a method for manufacturing an aggregated honeycomb structured body, the honeycomb structured body to be manufactured by the manufacturing method of the present invention may be a honeycomb structured body where the pillar-shaped honeycomb block is formed by a single honeycomb fired body (integral honeycomb structured body).

For manufacturing an integral honeycomb structured body of this kind, first, a honeycomb molded body is manufactured by using the same method as that used for manufacturing the aggregated honeycomb structured body, except that the honeycomb molded body to be formed through extrusion-molding has a larger size and a different outer shape in comparison with those of the aggregated honeycomb structured body.

Next, if necessary, drying treatment and/or charging of a plug material paste are/is carried out in the same manner as in the manufacturing of the aggregated honeycomb structured body, and after that, degreasing and firing are carried out in the same manner as in the manufacturing of the aggregated honeycomb structured body, thereby manufacturing a honeycomb block, and then, an integral honeycomb structured body is manufactured by forming a sealing material layer (coat layer) if necessary. Here, a catalyst may be supported on the integral honeycomb structured body by the method described above.

In the above-mentioned method for manufacturing a honeycomb structured body of the present invention, a honeycomb structured body having a predetermined shape can be favorably manufactured.
Although the description in the above has mainly discussed as a honeycomb structured body a honeycomb filter used for capturing particulates in exhaust gases, the honeycomb structured body can be suitably used as a catalyst supporting carrier (honeycomb catalyst) for converting exhaust gases as well.
Namely, a honeycomb structured body with cells each having either one of ends being sealed is suitably used as a honeycomb filter, and a honeycomb structured body having cells without sealed ends is suitably used as a catalyst carrier.

### EXAMPLES

The following will describe the present invention in more detail by means of examples; however, the present invention is not limited to only these examples.

### (Example 1)

(1) An amount of 96 kg of an α-type silicon carbide powder having an average particle diameter (D50) of 12 µm and 4 kg of a Fe₂O₃ powder (manufactured by Wako Pure Chemical Industries, Ltd., purity: 95% or more) having an average particle diameter (D50) of 1.0 µm were prepared as starting materials and wet-pulverized and wet-mixed using a wet-pulverizing and wet-mixing machine to obtain a mixture containing an α-type silicon carbide powder (also referred to as an silicon carbide fine powder) having an average particle diameter (D50) of 0.5 µm and a Fe₂O₃ powder having an average particle diameter (D50) of 0.5 µm. Here, a NaOH solution was used as a solvent for wet-pulverizing and wet-mixing.
In all Examples, Reference Example and Comparative Example including the present Example, average particle diameters were measured by a laser diffraction scattering method.
The content of the Fe₂O₃ powder in the above-mentioned mixture was 4% by weight.

(2) Next, after drying the mixture with a drying apparatus, 300 kg of an α-type silicon carbide coarse powder having an average particle diameter (D50) of 12 µm was added to the dried mixture, and dry mixed using a dry mixing machine to manufacture a material for a silicon carbide fired body.
The content of the Fe₂O₃ powder in the material for a silicon carbide fired body was 1% by weight.

### (Example 2)

A material for a silicon carbide fired body was manufactured in the same manner as that of Example 1, except that, in the process (1) of Example 1, a Fe₃O₄ powder (manufactured by Wako Pure Chemical Industries, Ltd., purity: 95% or more) prepared to have an average particle diameter (D50) of 1.0 µm was used in place of the Fe₂O₃ powder.

### (Example 3)

A material for a silicon carbide fired body was manufactured in the same manner as that of Example 1, except that, in the process (1) of Example 1, a FeO powder (manufactured by Wako Pure Chemical Industries, Ltd., purity: 95% or more) prepared to have an average particle diameter (D50) of 1.0 µm was used in place of the Fe₂O₃ powder.

### (Examples 4, 5)

A material for a silicon carbide fired body was manufactured in the same manner as that of Example 1, except that, in the process (1) of Example 1, the compounding amount of the Fe₂O₃ powder was changed to 1 kg (Example 4) and 10 kg (Example 5).
Here, the contents of the Fe₂O₃ powder in the materials for a silicon carbide fired body were 0.25% by weight and 2.46% by weight in Example 4 and Example 5, respectively.

### (Example 6)

A material for a silicon carbide fired body was manufactured in the same manner as that of Example 1, except that, in the process (1) of Example 1, 96 kg of an α-type silicon carbide powder having an average particle diameter (D50) of 12 µm and 4 kg of a Fe₂O₃ powder (manufactured by Wako Pure Chemical Industries, Ltd., purity: 95% or more) having an average particle diameter (D50) of 1.0 µm were prepared as starting materials and wet-pulverized and wet-mixed using a wet-pulverizing and wet-mixing machine to obtain a mixture containing an α-type silicon carbide powder (also referred to as an silicon carbide fine powder) having an average particle diameter (D50) of 0.1 µm and a Fe₂O₃ powder having an average particle diameter (D50) of 0.1 µm.

### (Example 7)

A material for a silicon carbide fired body was manufactured in the same manner as that of Example 1, except that, in the process (1) of Example 1, 96 kg of an α-type silicon carbide powder having an average particle diameter (D50) of 12 µm and 4 kg of Fe₂O₃ powder (manufactured by Wako Pure Chemical Industries, Ltd., purity: 95% or more) having an average particle diameter (D50) of 1.0 µm were prepared as starting materials and wet-pulverized and wet-mixed using a wet-pulverizing and wet-mixing machine to obtain a mixture containing an α-type silicon carbide powder having an average particle diameter (D50) of 1.0 µm and a Fe₂O₃ powder having an average particle diameter (D50) of 1.0 µm.

### (Example 8)

A material for a silicon carbide fired body was manufactured in the same manner as that of Example 1, except that, in the process (2) of Example 1, an α-type silicon carbide coarse powder having an average particle diameter (D50) of 5 µm was used, in place of the α-type silicon carbide coarse powder having an average particle diameter (D50) of 12 µm.

### (Example 9)

A material for a silicon carbide fired body was manufactured in the same manner as that of Example 1, except that, in the process (2) of Example 1, an α-type silicon carbide coarse powder having an average particle diameter (D50) of 20 µm was used, in place of the α-type silicon carbide coarse powder having an average particle diameter (D50) of 12 µm.

### (Reference Example)

A material for a silicon carbide fired body was manufactured in the same manner as that of Example 1, except that, in the process (2) of Example 1, an α-type silicon carbide coarse powder having an average particle diameter (D50) of 0.5 µm was used, in place of the α-type silicon carbide coarse powder having an average particle diameter (D50) of 12 µm. Accordingly, both of the α-type silicon carbide powder contained in the mixture manufactured in the process (1) and the α-type silicon carbide powder added in the process (2) had an average particle diameter (D50) of 0.5 µm.

### (Comparative Example)

A material for a silicon carbide fired body was manufactured in the same manner as that of Example 1, except that a Fe₂O₃ powder was not mixed in the process (1) of Example 1.

Next, honeycomb structured bodies were manufactured by carrying out the following processes (i) to (vii) using the materials for a silicon carbide fired body manufactured in Examples 1 to 9, Reference Example, and Comparative Example.

(i) An amount of 350 kg of the above-mentioned material for a silicon carbide fired body and 20 kg of an organic binder (methyl cellulose) were mixed to prepare a mixed powder.
Next, separately, 12 kg of a lubricant (manufactured by NOF CORPORATION, UNILUB), 5 kg of a plasticizer (glycerin) and 65 kg of water were mixed to prepare a liquid mixture, and the liquid mixture and the mixed powder were mixed using a wet mixing machine to prepare a wet mixture.

(ii) Next, using a conveyer, the wet mixture was conveyed to an extrusion-molding machine, and then charged into a material charging port.
Subsequently, by carrying out extrusion-molding, a molded body having the same shape as the one shown in Fig. 2(a), except that end portions of cells are not sealed, was manufactured.

(iii) Next, the honeycomb molded body was dried by using a drying apparatus that applies microwave and hot-air in combination, and subsequently, predetermined cells were filled with a plug material paste having the same composition as the wet mixture.
Furthermore, after again drying by using the drying apparatus, degreasing was carried out on the honeycomb molded body filled with the plug material paste under the conditions: a degreasing temperature of 350°C; an O₂ concentration in the atmosphere of 9%; and degreasing time of 3 hours, thereby manufacturing a honeycomb degreased body.

(iv) Next, by carrying out firing at a temperature of 2200°C in a normal-pressure argon atmosphere for 3 hours, a rectangular pillar-shaped honeycomb fired body comprising a silicon carbide sintering body having a porosity of 40%, a size of 34.3 mm × 34.3 mm × 150 mm, the number of cells (cell density) of 46.5 pcs/cm², and a cell wall thickness of 0.25 mm, was manufactured.

(v) Next, a round pillar-shaped honeycomb block having a sealing material layer (adhesive layer) with a thickness of 1. 0 mm was manufactured by adhering a large number of honeycomb fired bodies together by using a heat resistant sealing material paste (adhesive layer paste) containing 30% by weight of an alumina fiber having an average fiber length of 20 µm, 21% by weight of a silicon carbide particle having an average particle diameter of 0.6 µm, 15% by weight of silica sol, 5.6% by weight of carboxymethyl cellulose, and 28.4% by weight of water; drying at a temperature of 120°C; and then cutting by using a diamond cutter.

(vi) Next, a sealing material paste (coat layer paste) was prepared by mixing and kneading together 23.3% by weight of a silica-alumina fiber (average fiber length of 100 µm, average fiber diameter of 10 µm) as an inorganic fiber, 30.2% by weight of a silicon carbide powder having an average particle diameter of 0.3 µm as an inorganic particle, 7% by weight of silica sol (SiO₂ content within the sol: 30% by weight) as an inorganic binder, 0.5% by weight of carboxymethyl cellulose as an organic binder and 39% by weight of water.

(vii) Next, by using the sealing material paste (coat layer paste), a sealing material paste layer having a thickness of 0.2 mm was formed on the periphery of the honeycomb block. This sealing material paste was then dried at a temperature of 120°C to manufacture a round pillar-shaped honeycomb structured body having a size of 143.8 mm × 150 mm in diameter and length with the sealing material layer (coat layer) formed on the periphery thereof.

As results of manufacturing the honeycomb structured bodies using the materials for a silicon carbide fired body manufactured in Examples 1 to 9, Reference Example and Comparative Example, use of the materials for a silicon carbide fired body manufactured in Examples 1 to 9 enabled manufacturing honeycomb structured bodies having a desired pore diameter (8 to 12 µm) (set value) causing low pressure loss.
The honeycomb structured body manufactured using the material for a silicon carbide fired body manufactured in Reference Example has a pore diameter in a wider range (5 to 15 µm) than that of the desired pore diameter, and showed inferior properties in terms of variation in the pore diameters and pressure loss, in comparison with the honeycomb structured bodies manufactured using the materials for a silicon carbide fired body manufactured in Examples. The reason is considered to be as follows: the average particle diameter (D50) of the α-type silicon carbide powder added in the process (2) was as small as 0.5 µm, and the same as the average particle diameter of the α-type silicon carbide powder contained in the mixture manufactured in the process (1) (the material for a silicon carbide sintered body of Reference Example contained no α-type silicon carbide coarse powder.)

On the other hand, in case of using the material for a silicon carbide fired body manufactured in Comparative Example, the manufactured honeycomb structured body failed to have a sufficiently large pore diameter (3 to 9 µm) and had a larger variation in the pore diameters, and also had a lower strength than those obtained by using the materials for a silicon carbide fired body manufactured in Examples 1 to 9 and Reference Example.
Here, the pore diameter was measured using a fine-pore distribution measuring apparatus (Autopore III 9405, manufactured by Shimadzu Corp.) by mercury porosimetry, and initial pressure loss under a flow rate of 1000 N·m³/h was measured as the pressure loss.

### BRIEF DESCRIPTION OF THE DRAWINGS

Fig. 1 is a perspective view schematically showing one example of a honeycomb structured body manufactured by the method for manufacturing a honeycomb structured body of the present invention.
Fig. 2(a) is a perspective view schematically showing a honeycomb fired body forming the honeycomb structured body shown in Fig. 1, and Fig. 2(b) is an A-A line cross sectional view thereof.

### EXPLANATION OF SYMBOLS

- 100: Honeycomb structured body
- 101: Sealing material layer (adhesive layer)
- 102: Sealing material layer (coat layer)
- 103: Honeycomb block
- 110: Honeycomb fired body
- 111: Cell
- 112: Plug
- 113: Cell wall

## Claims

1. A method for manufacturing a material for a silicon carbide fired body, comprising a process of
wet mixing, or wet-pulverizing and wet-mixing at least a silicon carbide powder and an iron compound powder.

2. The method for manufacturing a material for a silicon carbide fired body according to claim 1,
wherein
said iron compound powder comprises at least one kind selected from a group consisting of Fe₂O₃, Fe₃O₄ and FeO.

3. The method for manufacturing a material for a silicon carbide fired body according to claim 1 or 2,
wherein
the content of said iron compound powder in said material for a silicon carbide fired body is 0.25 to 2.5% by weight.

4. The method for manufacturing a material for a silicon carbide fired body according to any of claims 1 to 3,
wherein
in a mixture obtained by wet mixing, or wet-pulverizing and wet-mixing said silicon carbide powder and said iron compound powder, an average diameter (D50) of said iron compound powder having been wet mixed, or wet-pulverized and wet-mixed is 0.1 to 1.0 µm and equal to or less than an average particle diameter (D50) of said silicon carbide powder having been wet mixed, or wet-pulverized and wet-mixed.

5. The method for manufacturing a material for a silicon carbide fired body according to any of claims 1 to 4, further comprising a process of
adding and mixing a silicon carbide coarse powder having a larger average particle diameter (D50) than that of said silicon carbide powder having been wet mixed, or wet-pulverized and wet-mixed, to the mixture obtained by wet mixing, or wet-pulverizing and wet-mixing said silicon carbide powder and said iron compound powder.

6. The method for manufacturing a material for a silicon carbide fired body according to claim 5,
wherein
said silicon carbide powder having been wet mixed, or wet-pulverized and wet-mixed has an average particle diameter (D50) of 0.1 to 1.0 µm.

7. The method for manufacturing a material for a silicon carbide fired body according to claim 5 or 6,
wherein
said silicon carbide coarse powder has an average particle diameter (D50) of 0.3 to 50 µm.

8. The method for manufacturing a material for a silicon carbide fired body according to any of claims 5 to 7,
wherein
the content of said iron compound powder in the mixture obtained by wet mixing, or wet-pulverizing and wet-mixing said silicon carbide powder and said iron compound powder is 1 to 10% by weight.

9. The method for manufacturing a material for a silicon carbide fired body according to any of claims 5 to 8, comprising a process of
adding and mixing the silicon carbide coarse powder to the mixture obtained by wet mixing, or wet-pulverizing and wet-mixing said silicon carbide powder and said iron compound powder, after carrying out drying treatment on the mixture.

10. The method for manufacturing a material for a silicon carbide fired body according to any of claims 1 to 9,
wherein
a purity of said iron compound powder is more than 80% and equal to or less than 99%.

11. A method for manufacturing a honeycomb structured body, comprising a process of:
manufacturing a pillar-shaped honeycomb molded body in which a large number of cells are disposed in parallel with one another in a longitudinal direction with a cell wall therebetween by molding a raw material composition containing a material for a silicon carbide fired body and an additive;
manufacturing a honeycomb degreased body by carrying out degreasing treatment on said honeycomb molded body; and
manufacturing a honeycomb structured body including a honeycomb fired body by carrying out firing treatment on said honeycomb degreased body,
wherein
said material for a silicon carbide fired body is manufactured by a manufacturing method including a process of wet mixing, or wet-pulverizing and wet-mixing at least a silicon carbide powder and an iron compound powder.

12. The method for manufacturing a honeycomb structured body according to claim 11,
wherein
said iron compound powder comprises at least one kind selected from a group consisting of Fe₂O₃, Fe₃O₄ and FeO.

13. The method for manufacturing a honeycomb structured body according to claim 11 or 12,
wherein
the content of said iron compound powder in said material for a silicon carbide fired body is 0.25 to 2.5% by weight.

14. The method for manufacturing a honeycomb structured body according to any of claims 11 to 13,
wherein
in a mixture obtained by wet mixing, or wet-pulverizing and wet-mixing said silicon carbide powder and said iron compound powder, an average diameter (D50) of said iron compound powder having been wet mixed, or wet-pulverized and wet-mixed is 0.1 to 1.0 µm and equal to or less than an average particle diameter (D50) of said silicon carbide powder having been wet mixed, or wet-pulverized and wet-mixed.

15. The method for manufacturing a honeycomb structured body according to any of claims 11 to 14, further comprising a process of
adding and mixing a silicon carbide coarse powder having a larger average particle diameter (D50) than that of said silicon carbide powder having been wet mixed, or wet-pulverized and wet-mixed, to the mixture obtained by wet mixing, or wet-pulverizing and wet-mixing said silicon carbide powder and said iron compound powder.

16. The method for manufacturing a honeycomb structured body according to claim 15,
wherein
said silicon carbide powder having been wet mixed, or wet-pulverized and wet-mixed has an average particle diameter (D50) of 0.1 to 1.0 µm.

17. The method for manufacturing a honeycomb structured body according to claim 15 or 16,
wherein
said silicon carbide coarse powder has an average particle diameter (D50) of 0.3 to 50 µm.

18. The method for manufacturing a honeycomb structured body according to any of claims 15 to 17,
wherein
the content of said iron compound powder in the mixture obtained by wet mixing, or wet-pulverizing and wet-mixing said silicon carbide powder and said iron compound powder is 1 to 10% by weight.

19. The method for manufacturing a honeycomb structured body according to any of claims 15 to 18, comprising a process of
adding and mixing the silicon carbide coarse powder to the mixture obtained by wet mixing, or wet-pulverizing and wet-mixing said silicon carbide powder and said iron compound powder, after carrying out drying treatment on the mixture.

20. The method for manufacturing a honeycomb structured body according to any of claims 11 to 19,
wherein
a purity of said iron compound powder is more than 80% and equal to or less than 99%.
